(19) Europäisches Patentamt
European Patent Office
Office européen des brevets

(11) **EP 1 832 015 B1**

(12) **EUROPEAN PATENT SPECIFICATION**

(45) Date of publication and mention
of the grant of the patent:
**26.02.2014 Bulletin 2014/09**

(21) Application number: **05821988.2**

(22) Date of filing: **23.12.2005**

(51) Int Cl.:
***H04W 72/12*** *(2009.01)*      *H04W 36/06* *(2009.01)*

(86) International application number:
**PCT/KR2005/004490**

(87) International publication number:
**WO 2006/068445 (29.06.2006 Gazette 2006/26)**

(54) **A METHOD FOR SCHEDULING RESOURCES OF PACKET LEVEL FOR INTEGRATED LEVEL FOR INTEGRATED TRAFFIC, AND AN APPARATUS THEREFOR**

VERFAHREN ZUR ZEITPLANUNG VON RESSOURCEN AUF PAKETEBENE FÜR INTEGRIERTE EBENEN FÜR INTEGRIERTEN VERKEHR SOWIE VORRICHTUNG DAFÜR

PROCEDE PERMETTANT DE PROGRAMMER DES RESSOURCES DE NIVEAU PAQUET AU NIVEAU INTEGRE POUR LE TRAFIC INTEGRE, ET APPAREIL A CET EFFET

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.12.2004 KR 20040111376**
**21.12.2005 KR 20050127125**

(43) Date of publication of application:
**12.09.2007 Bulletin 2007/37**

(73) Proprietor: **Electronics and Telecommunications Research**
**Institute**
**Daejeon 305-350 (KR)**

(72) Inventors:
• **KIM, Dong-hoi**
**Seoul 150-782 (KR)**
• **SONG, Pyeong-jung**
**Daejeon-city 305-762 (KR)**

(74) Representative: **Betten & Resch**
**Theatinerstrasse 8**
**80333 München (DE)**

(56) References cited:
**EP-A2- 1 432 183**      **EP-A2- 1 475 985**
**WO-A1-03/051007**      **WO-A2-99/07170**
**US-A1- 2004 095 901**      **US-B1- 6 292 484**
**US-B1- 6 370 117**      **US-B1- 6 693 892**

• **KUNMIN YEO ET AL: "A packet scheduler with forward equilibrium and adaptive fair selection method in wireless multimedia traffic environment", COMMUNICATION TECHNOLOGY PROCEEDINGS, 2003. ICCT 2003. INTERNATIONAL C ONFERENCE ON APRIL 9 - 11, 2003, PISCATAWAY, NJ, USA,IEEE, vol. 2, 9 April 2003 (2003-04-09), pages 1328-1331, XP010644095, ISBN: 978-7-5635-0686-6**

**Description**

[Technical Field]

The present invention relates to a packet-level scheduling method for integrated traffic and an apparatus using the same. More particularly, it relates to a packet-level scheduling method and an apparatus using the method for increasing the number of service users while satisfying diverse quality-of-service (QoS) requirements of integrated traffic, each traffic having a different level of priority, in a next-generation mobile communication system.

[Background Art]

As to a prior art, Korean Patent No. 2001-10615 (filed on February 28, 2001) disclosed "Packet Data Scheduling Method and Apparatus of Mobile Communication System."

In more detail, the prior art relates to a packet data scheduling method and an apparatus using the same for enhancing efficiency, while at the same time guaranteeing data service quality in a wireless network environment. According to the prior art, the data service efficiency can be enhanced while guaranteeing data service quality by dividing an input queue into a normal packet queue , an error link packet queue, and a delay packet queue, prioritizing the respective queues, and serving the respective queues according to their priorities, and utilizing channel information.

However, the prior art relates to a simple scheduling method using a channel environment and a state of a buffer, utilizing channel information and prioritizing queues, and an additional bandwidth is further allocated to the delay packet queue for packet transmission.

As to another prior art, Korean patent No. 2000-83690 (filed on December 28, 2000) disclosed "Call Processing System according to Quality of Service and Method Thereof in Mobile Communication System."

In more detail, the prior art relates to a system for processing packet data based on quality of service (QoS) priorities between packet data service networks, and a method thereof. The system provides a QoS-based wireless packet service by employing a first-in first-out (FIFO) policy such that input packets are controlled in accordance with their priorities in the wireless packet service network environment.

However, the prior art uses a queue with the FIFO policy and thus allows simple control depending on the QoS priorities.

For integrated traffic where real-time service and non real-time service coexist, two different types of multiplexing schemes can be used for packet allocation according to a prior art.

One is a fixed-priority scheme, employing a priority queuing algorithm which always prioritizes a real-time (RT) service class over a non real-time (NRT) service class such that NRT traffic is served with resources remaining after all of the RT traffic has been served. The other is to use priority metrics, each specified for an individual service class, and a user with the highest value metric is served first, regardless of its service class.

However, the prior art has a problem in maximization of the number of service users while satisfying QoS requirements of the users under an integrated traffic environment. Therefore, a new approach for maximizing the number of users in the integrated traffic environment is required.

For maximization of the multiplexing gain of RT service having a time constraint, capacity for a total number of users is maximized when delays of the RT service class users reach the maximum allowable delay. In other words, the capacity maximization can be achieved by allocating remaining resources to the NRT users before the RT user delay reaches the maximum allowable delay. However, when one RT user is additionally served after the delay of the RT user reaches the maximum allowable delay, the corresponding QoS requirement cannot be satisfied, and accordingly, the capacity reaches its limit.

However, according to the conventional resource allocation method, resource allocation cannot be delayed until delay of all RT users reaches the maximum allowable delay due to variations of channel condition and burstiness of RT and NRT traffic, and therefore it is unrealistic to realize complete multiplexing. That is, when delay of an RT user reaches the maximum allowable delay, instantaneous packet loss may occur, thereby causing performance degradation.

EP 1 432 183 A describes a system and method for downlink packet scheduling in a mobile communication system includes inputting real-time video traffic and non-real-time Internet traffic included in multimedia traffic into a packet scheduler positioned in a base station, providing service priority in input real-time video traffic, and performing packet scheduling of the real-time video traffic using a signal-to-interference ratio and an accumulation counter, discarding packets having a buffering window delay exceeding a predetermined reference value, the discarding of packets being performed during the packet scheduling of the real-time video traffic, and performing packet scheduling of the non-real-time Internet traffic using a signal-to-interference ratio in the case where there is no real-time video traffic to be serviced.

US 6,693,892 B1 describes a method of controlling communication resources, wherein connections are divided into at least two different connection classes according to their requirements for transmission delay. The control system of the base station subsystem maintains a record of the transmission needs of the users logged in different categories and based thereon divides the available radio resources into slots of suitable capacity. For connections with stringent requirements for transmission delay, circuit-switched connections are allocated with a bandwidth which can be controlled dynamically. Then from the resource pool still unassigned after the resource allocation to the circuit-switched connections, a sufficient amount of resources are allocated on a time-limited basis allocation for each allocation period to connections having a higher tolerance for delay so as to accomplish transmission, e.g. of a given amount of data.

[Disclosure]

[Technical Problem]

The present invention has been made in effort to provide a packet-level scheduling method and an apparatus thereof to maximize the number of real-time service class users and non real-time service class users while satisfying respective QoS requirements in an integrated traffic environment.

In addition, the present invention has been made an effort to provide a packet-level scheduling method and an apparatus thereof to increase system capacity while satisfying individual QoS requirements, i.e., the maximum allowable packet loss rate for real-time traffic and the minimum reserved bit rate for non real-time traffic in an integrated traffic environment.

[Technical Solution]

The present invention provides a packet-level scheduling method as defined in claim 1 and a packet-level scheduling apparatus as defined in claim 11

[Description of Drawings]

FIG. 1 shows a threshold value determination method for determining whether to serve packets for real-time traffic or non real-time traffic according to an exemplary embodiment of the present invention.

FIG. 2 shows a sum of normalization factors for real-time and non real-time service users according to an exemplary embodiment of the present invention.

FIG. 3 shows a process of a packet-level scheduling method for integrated traffic according to an exemplary embodiment of the present invention.

FIG. 4 is a downlink packet scheduling model in a base station for supporting integrated traffic according to an exemplary embodiment of the present invention.

FIG. 5 to FIG. 12 respectively show performance analysis according to an exemplary embodiment of the present invention.

[Best Mode]

An exemplary embodiment of the present invention will hereinafter be described in detail with reference to the accompanying drawings. In the following detailed description, only certain exemplary embodiments of the present invention have been shown and described, simply by way of illustration. As those skilled in the art would realize, the described embodiments may be modified in various different ways, all without departing from the scope of the present invention.

Throughout the specification and claims which follow, unless explicitly described to the contrary, the word "comprise/include" or variations such as "comprises/indudes" or "comprising/including" will be understood to imply the inclusion of stated elements but not the exclusion or any other elements.

Hereinafter, a packet-level scheduling method for integrated service traffic and an apparatus thereof according to an exemplary embodiment of the present invention will be described in detail with reference to the accompanying drawings.

A mobile communication system should prioritize each service class before delay of a real-time (RT) service user reaches a maximum allowable delay in order to deal with performance degradation due to instantaneous packet loss.

An appropriate or optimal delay time threshold value is established, and a RT service user is served when a packet delay exceeds the threshold value. Otherwise, a NRT service user is served according to the embodiment of the present invention. That is, an optimal threshold value may be established to maximize capacity for RT and NRT service users.

In addition, an opportunistic scheduling algorithm is an appropriate scheduling algorithm for supporting an integrated traffic environment where RT services having a time constraint and NRT services co-exist in a cellular wireless network having channel bandwidth variations due to an adaptive modulation and coding (AMC) algorithm according to an embodiment of the present invention.

At this time, individual QoS requirements should be satisfied. That is, the maximum allowable packet loss rate and minimum reserved bit rate should be satisfied for RT traffic and NRT traffic, respectively.

Similar to the existing proportional fairness (PF) algorithm, QoS requirements of service classes are independently satisfied while taking fairness between an instantaneous bit rate according to channel conditions and a served bit rate into account. That is, the QoS requirements of service classes respectively require independent packet scheduling algorithms.

A first process for priority determination for different service classes according to an exemplary embodiment of the present invention will now be described.

Under an integrated traffic environment, a delay constraint of RT traffic is more restricted than that of NRT traffic. Hence, the RT service class is prioritized over the NRT service class. In other words, NRT traffic is served with the resources remaining after all of the RT traffic has been served according to a priority queuing (PQ) algorithm.

As the first process for priority determination according to an exemplary embodiment of the present invention, a threshold value is established on the basis of a QoS-based priority queuing (QBPQ) algorithm. For example, a minimum allowable delay may be used as the threshold value for a head of line (HOL) packet delay for the RT traffic. The threshold value (i.e., the minimum allowable delay) may be used for determining whether the corresponding packet is to be served.

A second process for priority determination for users of the same service classes according to the embodiment of the present invention will now be described.

In the second process, priorities of the respective service classes are determined in accordance with QoS requirements of the respective traffic. For example, a maximum allowable packet loss rate and minimum reserved bit rate are the QoS requirements of the RT and NRT traffic, respectively. Thus, independent packet scheduling algorithms are used in an integrated manner so as to maximize the number of RT and NRT service users, while satisfying the individual QoS requirements.

For example, a packet loss rate-based scheduler (PLRBS) algorithm is used for RT traffic, and a minimum-bit rate based scheduler (MBRBS) algorithm that takes a minimum reserved bit rate into account is used for NRT traffic.

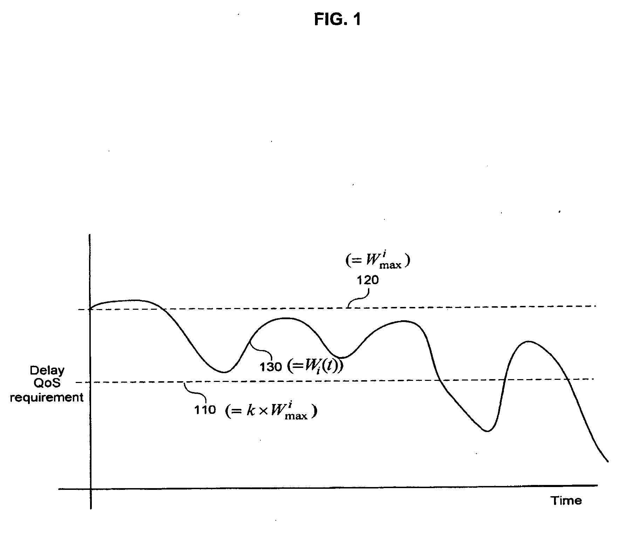

FIG. 1 shows a Head-Of-Line (HOL) delay threshold value. The HOL delay threshold value is used to determine whether to serve RT traffic packets according to an embodiment of the present invention.

Referring to FIG. 1, a maximum allowable delay $W_{max}^{t}$ 120 and a minimum allowable delay $kW_{max}^{t}$ 110 establish a fixed operational range for a specific service.

The maximum allowable delay $W_{max}^{t}$ 120 is used to determine whether to discard RT service packets, and the minimum allowable delay $kW_{max}^{t}$ 110 is used to determine which RT service packet to be served first. A measured HOL delay $W_i(t)$ 130 of a RT user i denotes that a specific service is substantially being scheduled.

The parameter $k$ has a range of 0 to 1. For example, when HOL packet delays of all RT service class users exceed minimum allowable delay $kW_{max}^{t}$ 110, RT service class users are scheduled. Otherwise, NRT service class users are scheduled. In other words, when $W_i(t)$ 130 is greater than $kW_{max}^{t}$ 110 at time $t$, the policy P is used for the RT users. Otherwise, the policy Q is used for the NRT users. The above-stated process can be expressed as Equation 1.

## [Equation 1]

$$\begin{cases} policy\,P, & W_i(t) \geq k \times W_{max}^{i} \\ policy\,Q, & otherwise \end{cases}$$

At this point, Equation 1 should satisfy the following three criteria.

(a) $k$ is a parameter (i.e., $0 \leq k \leq 1$), and the $kW_{max}^{t}$ 110 is less than the $W_{max}^{t}$ 120.

(b) the policy P is used for all RT users.

(c) the policy Q is used for all NRT users.

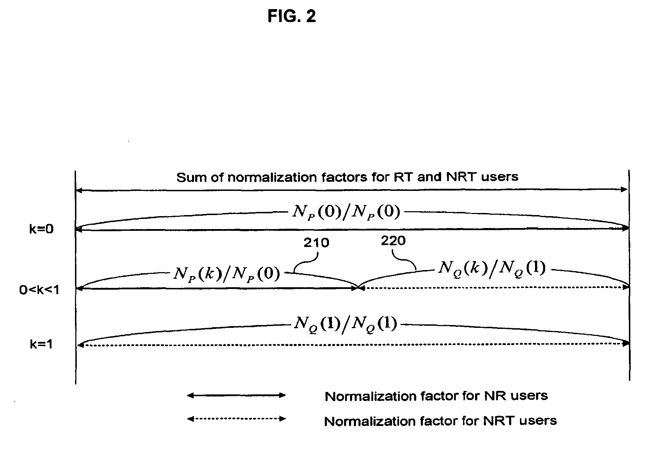

FIG. 2 shows a sum of normalization factors of RT and NRT users according to an exemplary embodiment of the present invention.

Referring to FIG. 2, a total number of RT users that satisfy the corresponding QoS requirement when $k \neq 0$ and $k = 0$ are respectively denoted by $N_p(k)$ and $N_p(0)$, and the normalization factor of the RT users is defined by a value obtained by $N_p(k)/N_p(0)$ 210. In addition, a total number of NRT users that satisfy the corresponding QoS requirements when $k \neq 1$ 1 and $k=1$ are respectively denoted by $N_Q(k)$ and $N_Q(1)$, and the normalization factor of the NRT users is defined by a value obtained by $N_Q(k)/N_Q(1)$ 220.

QoS requirements and performance measures of the RT and NRT service class users according to an exemplary embodiment of the present invention are as follows.

The performance of the RT service classes is determined by the packet loss rate, which is defined as the ratio of the number of dropped packets to the total number of packets. Packet dropping occurs when the corresponding packet delay exceeds a predetermined delay, denoted by $W_{max}$. When the number of dropped packets and the number of transmitted packets during a given simulation interval for user i are denoted by $N_i^{(d)}$ and $N_i^{(s)}$, respectively, the packet loss rate at time $t$ for user i is given as Equation 2.

**[Equation 2]**

$$PLR_i(t) = \frac{N_i^{(d)}(t)}{N_i^{(d)}(t) + N_i^{(s)}(t)} \, , \quad i \in U_{RT}$$

For each RT service class user, the QoS requirement is imposed by a target packet loss rate, denoted by $PLR_{max}$, i.e., $PLR_i(t) \leq PLR_{max}$, $\forall\, i \in U_{RT}$. Furthermore, the number of RT users may not satisfy the packet loss rate requirement in terms of the system outage probability. More particularly, the system outage probability for the RT service class users at time $t$ is determined by Equation 3.

**[Equation 3]**

$$P_{out}^{(L)} = \frac{Num(PLR_i(t) > PLR_{max})}{N_{total}}$$

where $Num(PLR_i(t) > PLR_{max})$ denotes the number of users whose packet loss rate exceeds the target packet loss rate and $N_{total}$ denotes the total number of RT service class users.

In this embodiment, the performance of the NRT service class is determined by an average bit rate supported during a packet call.

Assuming that there are K packet calls for a user session $i$, the average bit rate is defined by Equation 4.

**[Equation 4]**

$$\overline{R_i} = \frac{1}{K} \sum_{k=1}^{K} \frac{B_i^{(k)}}{t_d^{(k)} - t_a^{(k)}}, \quad i \in U_{RT}$$

where $B_i^{(k)}$ is the number of bits transmitted during the k-th packet call of user session $i$, while $t_a^{(k)}$ and $t_d^{(k)}$ denote arrival and departure times of the k-th packet, respectively. For each NRT service class user, the QoS requirement is imposed by the target minimum bit rate, denoted by $R_{min}$, i.e., $\overline{R_i} \leq R_{min}$, $\forall_i \in U_{RT}$. Furthermore, the system outage probability may occur if the number of NRT users does not satisfy the minimum bit rate requirement. More particularly, the system outage probability for the NRT service call users is defined by Equation 5. In more detail, the system outage probability of NRT service class users may be obtained from Equation 5.

**[Equation 5]**

$$P_{out}^{(R)} = \frac{Num(\overline{R}_i < R_{\min})}{N_{total}}$$

where $Num(\overline{R}i < R_{\min})$ denotes the number of users whose minimum bit rate does not exceed the target minimum bit rate.

The objective of the packet scheduling according to the exemplary embodiment of the present invention is to maximize the number of users that can be supported in the system. As the total number of users is an obvious measure of performance gain, it is set as the objective function to maximize. For an operator's policy on charging for the RT and NRT service class users, the objective function may be given by multiplying the number of RT service class users and the number of NRT service class users. When the performance gain for each user of the RT and NRT service classes are denoted by weighting factors, $\omega_{RT}$ and $\omega_{NRT}$, respectively, the objective function for the RT and NRT service class users are obtained by Equation 6.

**[Equation 6]**

$$f(k,P,Q) = \omega_{RT} N_p(k) + \omega_{NRT} N_Q(k)$$

where $\omega_{RT}$ is greater than $\omega_{NRT}$ even though the weight value factors may vary in accordance with the operator's policy. Therefore, the objective function is maximized according to the exemplary embodiment of the present invention.

Scheduling policies for the RT and NRT service class users are determined, and the corresponding parameter k is determined so as to maximize the objective function while satisfying the individual QoS requirements of the users in term of their outage performances. This can be formally stated as Equation 7 and Equation 8.

**[Equation 7**

$$\underset{\substack{0 \leq k \leq 1 \\ P,Q \in \Theta}}{\text{Maximize}} \left( \omega_{RT} N_P(k) + \omega_{NRT} N_Q(k) \right)$$

**[Equation 8]**

$$\text{subject to} \begin{cases} P_{out}^{(L)} = \Pr\{PLR_i(t) > PLR_{\max}\} \leq \tilde{P}_{out}^{(L)}, \forall i \in \mathbf{U}_{RT} \\ P_{out}^{(R)} = \Pr\{\overline{R}_i < R_{\min}\} \leq \tilde{P}_{out}^{(R)}, \quad \forall i \in \mathbf{U}_{NRT} \end{cases}$$

Where $\Theta$ denotes a set of all available scheduling policies, and $\widetilde{P}_{out}^{(L)}$ and $\widetilde{P}_{out}^{(R)}$ denote maximum allowable outage probabilities for the RT and NRT application users, respectively. $\widetilde{P}_{out}^{(L)}$ and $\widetilde{P}_{out}^{(R)}$ are given by Equation 3 and Equation 5, respectively. A sum of $\omega_{RT} N_p(k)$ and $\omega_{NRT} N_Q(k)$ is the objective function of the RT and NRT users.

Scheduling policies used in the exemplary embodiment of the present invention use a modified largest weighted delay first (M-LWDF) scheme and a packet loss rate-based scheduler (PLRBS) scheme for the RT service class, and use a proportional fairness (PF) scheme and minimum-bit rate based scheduler scheme for the NRT service class. An optimal scheduling policy is determined after comparison of the above-stated schemes.

**1) M-LWDF scheme for policy P**

The M-LWDF scheme is applied for the maximum delay requirement for each user $i$, $W^i_{max}$. For every subchannel at slot time $t$, the corresponding priority metric is given as Equation 9.

[Equation 9]

$$\mu_i(t) = b_i W_i(t) \frac{r_i(t)}{\overline{r_i}}$$

where $W_i(t)$ is the HOL packet delay for buffer $i$. Also, $b_i = -\dfrac{\log \delta_i}{W^i_{max}}$, with $\delta_i$ being the maximum probability of $W_i(t)$ exceeding $W^i_{max}$. $r_i(t)$ is the state of a channel of user i at time $t$, i.e., an actual rate supported by the channel. $\overline{r_i}$ is the rate corresponding to a mean fading level of user $i$. Note that $r_i(t)$ and $\overline{r_i}$ are time-varying with adaptive modulation, as they depend on the channel condition.

A user having the highest value of $\mu_i(t)$ is given a priority of receiving a transmission signal per sub-channel first at respective determination times. When every user has the same $W^i_{max}$ and $\delta_i$, Equation 9 can be simplified to Equation 10.

[Equation 10]

$$\mu_i(t) = W_i(t) \frac{r_i(t)}{\overline{r_i}}$$

**2) PLRBS scheme for policy P**

A priority metric obtained by the following Equation 11 may be used for each user $i$ on the basis of the ratio between the current packet loss rate $PLP_i(t)$ obtained by Equation 2 and the maximum allowable packet loss rate $PLP^i_{max}$.

【Equation 11】

$$\mu_i(t) = \begin{cases} W_i(t)\dfrac{r_i(t)}{\overline{r_i}}\dfrac{PLP^i_{max}}{PLP_i(t)}, & PLP_i(t) > PLP^i_{max}, \\[3mm] W_i(t)\dfrac{r_i(t)}{\overline{r_i}}\dfrac{\kappa}{PLP^i_{max}}, & PLP_i(t) < \kappa \leq PLP^i_{max} \\[3mm] W_i(t)\dfrac{r_i(t)}{\overline{r_i}}\dfrac{PLP_i(t)}{PLP^i_{max}}, & otherwise, \end{cases}$$

Where k is a constant number greater than zero and less than $PLP^i_{max}$.

**3) PF scheme for policy Q**

The PF scheduling algorithm, originally designed for the cdma2000 1x EV-DO system, is based on the data rate control (DRC) value. The priority metric for the PF scheduling algorithm may be given as Equation 12.

**[Equation 12]**

$$\mu_i(t) = \frac{r_i(t)}{\overline{r_i}}$$

where $r_i(t)$ is the state of a channel of user $i$ at time $t$, and $\overline{r_i}$ is the rate corresponding to a mean fading level of user $i$.

**4) MBRBS scheme for policy Q**

Each NRT service user is given the minimum reserved bit rate, $R_{\min}^i$, as a new QoS requirement. According to an exemplary embodiment of the present invention, a new priority metric is obtained for maximizing the number of NRT service class users while satisfying the minimum reserved bit rate. To maximize the number of World Wide Web (WWW) service users satisfying the minimum reserved bit rate, the priority metric for all subchannels at the slot time $t$ is given by Equation 13.

**[Equation 13]**

$$\mu_i(t) = \begin{cases} \dfrac{R_{\min}^i}{\overline{R_i}} \dfrac{r_i(t)}{\overline{r_i}}, & \overline{R_i} > R_{\min}^i, \\ \dfrac{r_i(t)}{\overline{r_i}}, & otherwise, \end{cases}$$

If it is assumed that $\dfrac{r_i(t)}{\overline{r_i}}$ denotes a constant value, an increase of a value of $\vec{R_i}$ decreases a value of $\mu_i(t)$

and a decrease of the value of $\overline{R_i}$ increases the value of $\mu_i(t)$ when $\overline{R_i} > R_{\min}^i$. If $\overline{R_i} > R_{\min}^i$, a chance of a user being scheduled increases since the value of $\mu_i(t)$ increases as the value of $\vec{R_i}$ becomes closer to the desired minimum reserved bit rate $R_{\min}^i$. The number of NRT service class users may increase while satisfying the minimum reserved bit rate by the above-stated priority metric. As a result, the number of users having a mean bit rate higher than the desired minimum reserved bit rate $R_{\min}^i$ is maximized.

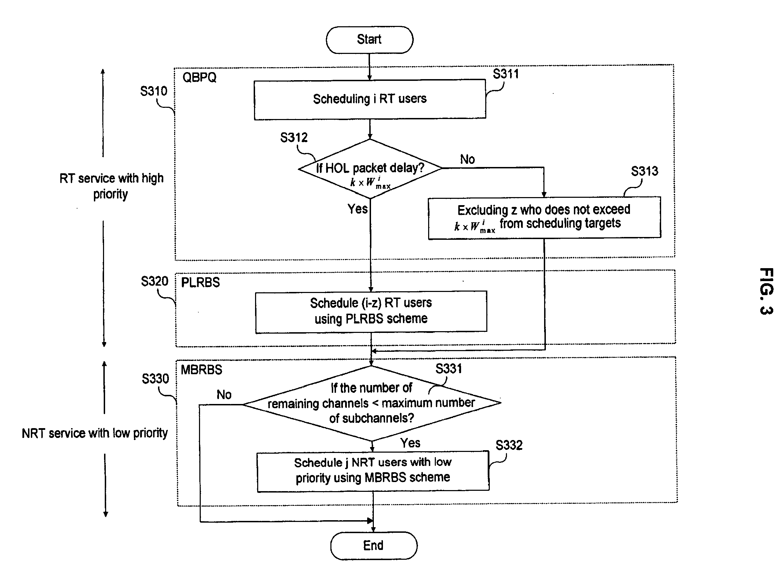

Referring to FIG. 3, an orthogonal frequency division multiplexing access (OFDMA) system is exemplarily used in the exemplary embodiment of the present invention.

When there are i RT users, a first QoS-based priority queuing (QBPQ) S310 schedules the i RT users in step S311, and checks whether the HOL packet delay is greater than the minimum allowable delay $kW_{\max}^t$ in step S312. If the HOL packet delay is less than or equal to the minimum allowable delay $kW_{\max}^t$, a number of RT users z that do not exceed the minimum allowable delay $kW_{\max}^t$ are excluded in step S313. Assuming that there are 12 subchannels available for each time slot, the packet scheduling is stopped when more than 12 subchannels are allocated during the packet scheduling.

Subsequently, if the HOL packet delay is greater than the minimum allowable delay $kW_{\max}^t$, (i - z) RT users are selected and scheduled in accordance with the PLRBS scheme in a second QBPQ S320. The PLRBS is designed for packet loss reduction.

When the scheduling process for the (*i - z*) RT users is finished, a third QBPQ S330 is processed. In the third QBPQ S330, the number of remaining subchannels is checked in step S331. If the number of remaining subchannels is less than a maximum number of subchannels, the MBRBS scheme is used to schedule the NRT uses while satisfying the minimum reserved bit rate in step S332.

The first and second QBPQ S310 and S320 schedule RT service class users having higher priority over the NRT service class users, and the third QBPQ S330 schedules NRT service class users having lower priority. The first to third QBPQ are repeatedly performed during a packet call.

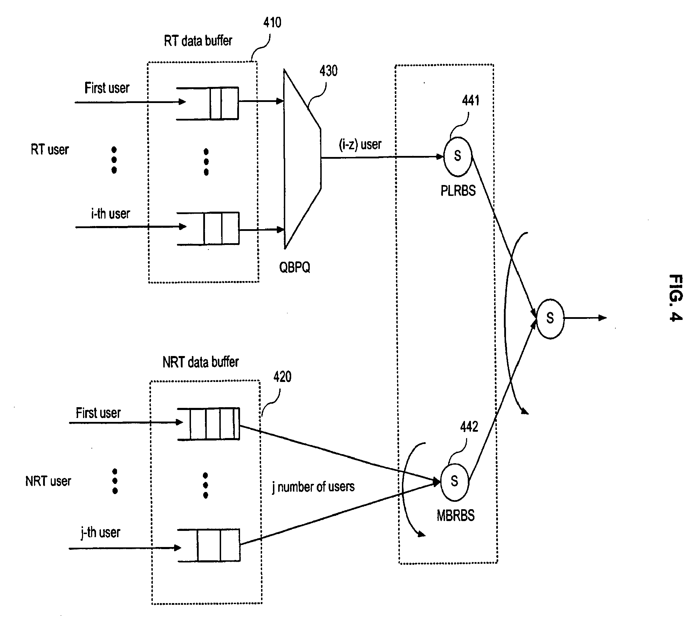

FIG. 4 shows a downlink (DL) packet scheduling model of a base station to support integrated traffic according to an exemplary embodiment of the present invention. The DL packet scheduling model may include a RT data buffer 410, an NRT buffer 420, a QBPQ scheduler 430, a PLRBS scheduler 441, and a MBRBS scheduler 442.

Referring to FIG. 4, the RT data buffer 410 stores RT data for i RT users, and the NRT buffer 420 stores NRT data for j NRT users.

The QBPQ 420 schedules the RT data stored in the RT data buffer 410 for the i RT users when the HOL packet delay for the i RT users exceed the predetermined threshold value, $kW_{max}^{t}$ , the z RT users are excluded since their HOL packet delays do not exceed $kW_{max}^{t}$ .

The PLRBS scheduler 441 performs PLRBS scheduling for (i-z) RT users, and the MBRBS scheduler 442 performs MBRBS scheduling for the NRT users when there are remaining subchannels after the PLRBS scheduling is performed.

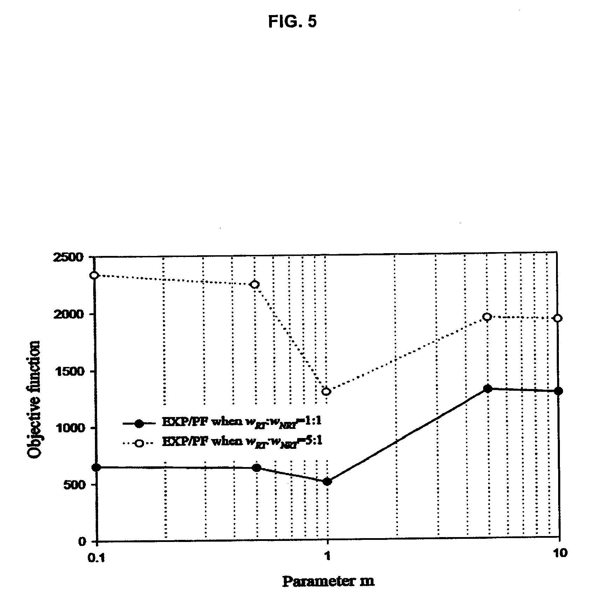

FIG. 5 to FIG. 12 respectively show performance analyses according to an exemplary embodiment of the present invention.

FIG. 5 represents a relationship between the objective function and the parameter m when the EXP/PF scheme is used and the weight factor ratio is different. FIG. 5 shows the number of RT and NRT service class users satisfying $\widetilde{P}_{out}^{(L)} = \widetilde{P}_{out}^{(R)} = 0.1$ for the different values of m (0.1, 0.5, 1, 5, 10) in Equation 6. From this instance, the objective function is maximized at m=0.1 when $\omega_{RT} : \omega_{NRT}$ = 5:1. However, the objective function is maximized at m=5 when $\omega_{RT} : \omega_{NRT}$ = 1:1.

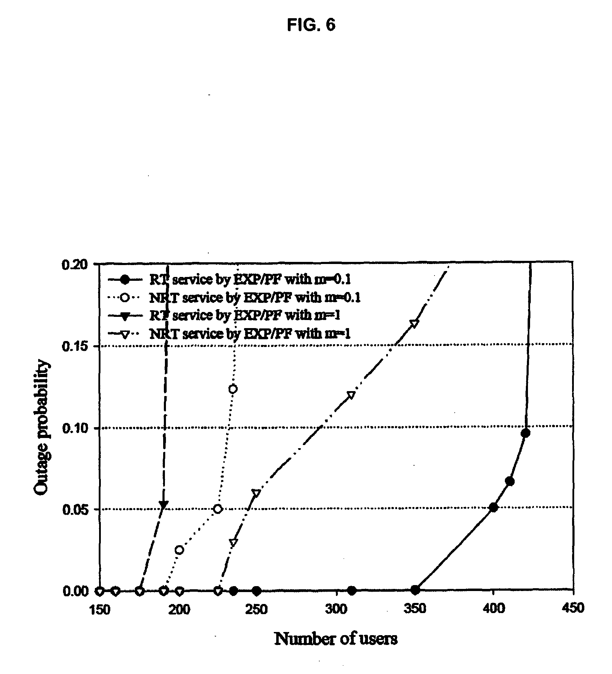

FIG. 6 represents a relationship between the outage probability and the number of RT and NRT users when the EXP/PF scheme is used and the weighting factor ratio is $\omega_{RT}: \omega_{NRT}$ = 5: 1. FIG. 6 shows variations of the outage probability obtained from Equation 3 and Equation 5 as the number of RT and NRT users increases. As shown in FIG. 5, the objection function has an optimal value at m=0.1, and the number of RT traffic user at m=0.1 is greater than the number of RT users when m = 1 in the case that the number of RT and NRT service class users satisfying $\widetilde{P}_{out}^{(L)} = \widetilde{P}_{out}^{(R)} = 0.1$ are taken into account. However, the number of NRT users is reduced at m=0.1 rather than at m=1. This implies that the number of users supported for each service class varies depending on the value of the parameter m.

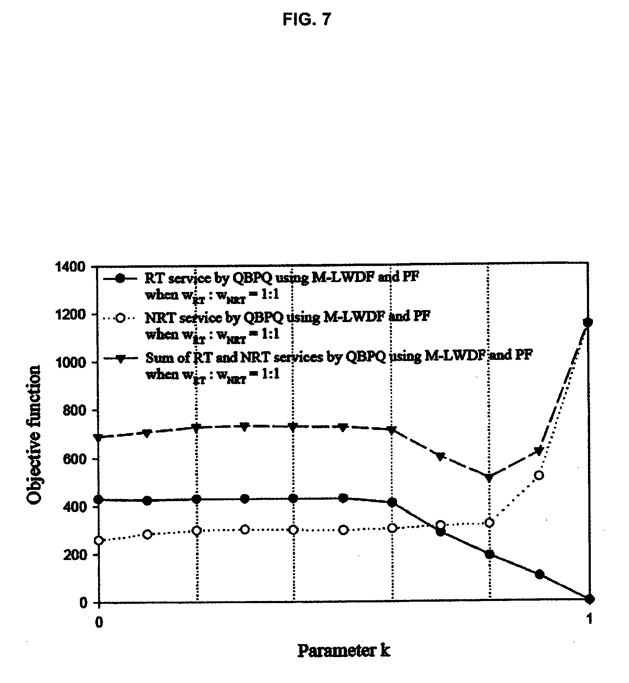

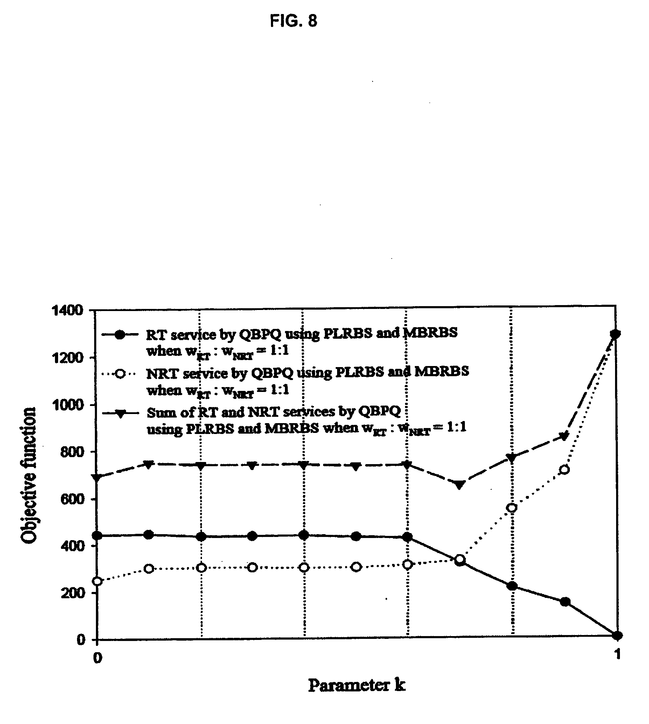

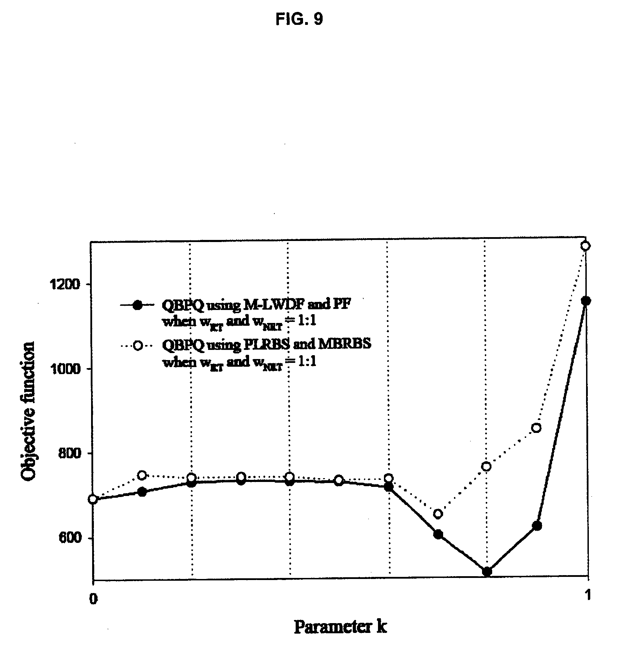

FIG. 7 shows a relationship between the objective function and the parameter k when the M-LWDF and PF scheme is the QBPQ scheme is applied, FIG. 8 shows a relationship between the objective function and the parameter k when the PLRBS and MBRBS scheme is the QBPQ scheme, and FIG. 9 shows a relationship between the objective function and the parameter k when a scheduling scheme which differs from the QBPQ scheme is applied.

Referring to FIG. 7 to FIG. 9, when the QBPQ scheme is used, the objective function of Equation 6 satisfies $\widetilde{P}_{out}^{(L)} = \widetilde{P}_{out}^{(R)} = 0.1$ depending on the values of the parameter k and a weighting factor for the RT and NRT service classes. At this point, the QBPQ scheme may be processed in two different ways. One of the two different ways is applying the PLRBS scheme to the RT service class and applying the MBRBS scheme to the NRT service class (referring to FIG. 7). The other is applying the M-LWDF scheme to the RT service class and applying the PF scheme to the NRT service class (referring to FIG. 8). FIG. 9 shows the variation of objective function in the two cases.

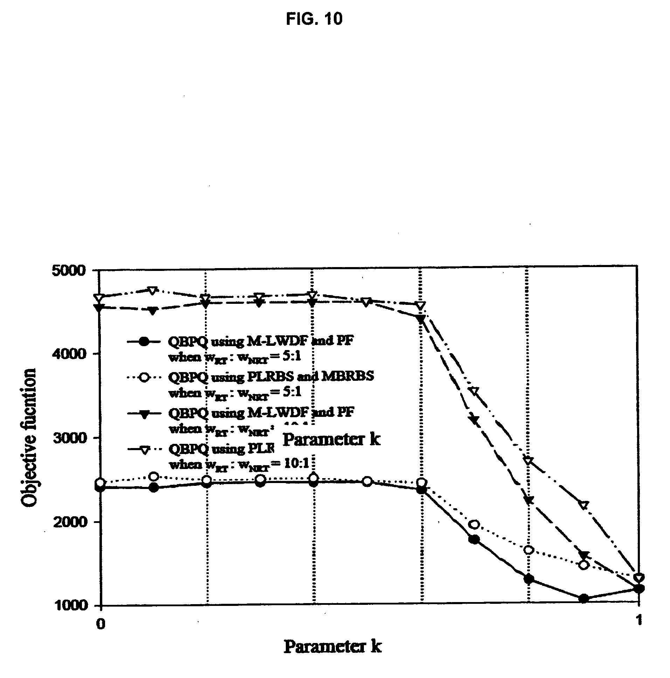

FIG. 10 represents a relationship between the objective function and the parameter k when the QBPQ scheme is used and the weighting factors of the RT and NRT users are different from each other. As shown in FIG. 10, the objective function is maximized at k = 0.1 when $\omega_{RT} : \omega_{NRT}$ = 5:1 and $\omega_{RT} : \omega_{NRT}$ = 10:1. Therefore, the PLRBS and MBRBS schemes are appropriate for scheduling RT and NRT service classes to maximize the objective function while satisfying the individual QoS requirements for the outage performance.

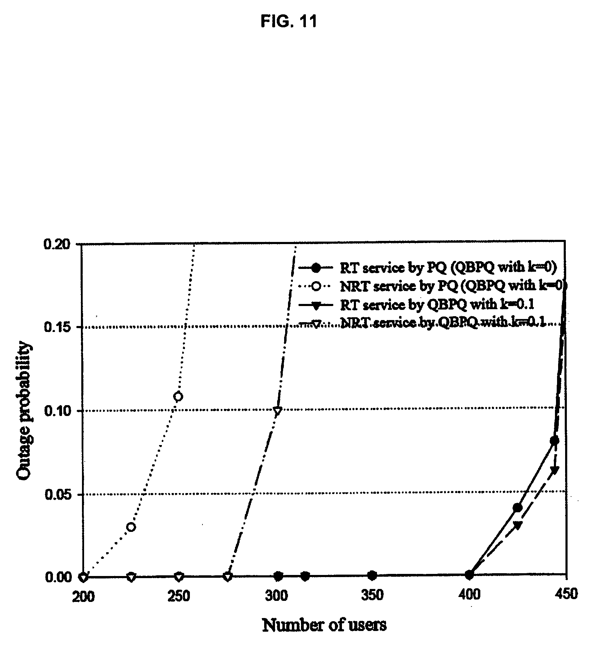

FIG. 11 represents a relationship between the objective function and the parameter k when the QBPQ with k = 0.1 and PQ schemes are used. FIG. 11 shows the results for the QBPQ and PQ schemes, which are represented in terms of the outage probability in Equation 3 and 5, respectively. As shown in FIG. 11, it is noted that there exists an optimal value of k satisfying Equation 7 and Equation 8, k=0.1 when $\omega_{RT} : \omega_{NRT}$ = 5:1. In addition, the QBPQ scheme with k=0 is the same as the conventional PQ scheme. Therefore, when using the QBPQ scheme with k=0.1, the number of RT and NRT users satisfying $\widetilde{P}_{out}^{(L)} = \widetilde{P}_{out}^{(R)} = 0.1$ is much greater than that obtained when using the conventional PQ scheme.

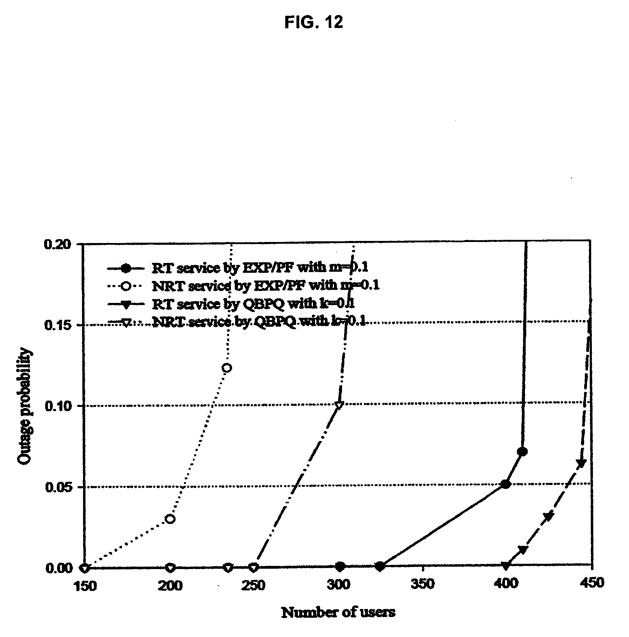

FIG. 12 represents a relationship between the object function and the parameter k when the EXP/PF scheme with m = 0.1 and the QBPQ scheme with k = 0.1 are used. It is noted that the objective function is maximized at m=0.1 when $\omega_{RT} : \omega_{NRT}$ = 5:1 in FIG. 5. FIG. 12 shows a relationship between an increase of the number of users when the QBPQ scheme with k = 0.1 and the EXP/PF scheme with m = 0.1 and the outage probability as a result of comparison between the QBPQ scheme with k = 0.1 and the EXP/PF scheme with m = 0.1 in terms of the outage probability.

A total of 446 RT service users and 301 NRT service users can be simultaneously supported when the QBPQ scheme with k = 0.1 is used while satisfying the outage probability of less than 10%, i.e., $\widetilde{P}_{out}^{(L)} = \widetilde{P}_{out}^{(R)} = 0.1$. In addition, a total of 410 RT service users and 230 NRT users can be simultaneously supported when using the EXP/PF scheme. As a result, it is noted that when using the QBPQ scheme that employs the PLRBS and MBRBS schemes, the number of RT and NRT traffic users satisfying $\widetilde{P}_{out}^{(L)} = \widetilde{P}_{out}^{(R)} = 0.1$ is much greater than that obtained when using the conventional EXP/PF scheme.

Accordingly, the number of RT and NRT users satisfying individual QoS requirements is much greater than that obtained when using the conventional scheduling schemes.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

[Industrial Applicability]

According to the present invention, capacity for real-time and non real-time users can be maximized while satisfying individual QoS requirements in an integrated traffic environment.

In addition, an appropriate or optimal threshold value for delay is pre-established and real-time users are served when delay of the real-time traffic packet exceeds the threshold value. Otherwise, non real-time users are served. In this way, system capacity for real-time and non real-time users can be maximized while satisfying the maximum allowable packet loss rate and the minimum reserved bit rate for real-time and non real-time traffic, respectively.

**Claims**

1. A packet-level scheduling method for providing individual quality of service for each data packet traffic of a plurality of data packets transmitted from a plurality of users in a cellular system. the packet-level scheduling method comprising:

   determining the plurality of data packets to be real-time service traffic and non real-time service traffic;
   QoS-based priority queuing, QBPQ, scheduling (S310) a plurality of users that have transmitted data packets determined to be real-time service traffic on the basis of a predetermined threshold value for delay time and traffic of the packets; and
   minimum-bit rate based, MBRBS, scheduling (S330) a plurality of users that have transmitted data packets determined to be non real-time service traffic when there are remaining channels after packet loss rate based, PLRBS, scheduling of the real-time service users is finished,
   **characterized by** setting the predetermined threshold value for the delay time of the real-time packets such as to maximize capacity for real-time traffic service users and non real-time traffic service users.

2. The packet-level scheduling method of claim 1, wherein the capacity maximization for real-time traffic users and for non real-time traffic users is performed assigning the real-time traffic users a first weighting coefficient and assigning the non real-time traffic users a second weighting coefficient.

3. The packet-level scheduling method of claim 1 or 2, wherein the threshold value is established by a Quality of Service, QoS,-based priority queuing algorithm.

**4.** The packet-level scheduling method of claim 2, wherein the threshold value is established to be a minimum allowable delay for a head-of-line, HOL, packet delay, and when delay of the packet exceeds a threshold value, the corresponding packet is discarded and a user that has transmitted the packet is excluded from being scheduled.

**5.** The packet-level scheduling method of claim 2 or claim 4, wherein when the delay of the packet is less than a parameter obtained by multiplying the threshold value and a predetermined weight for the real-time service traffic, a user that has transmitted the packet is excluded from being scheduled.

**6.** The packet-level scheduling method of claim 5, wherein a packet loss rate-based scheduling, PLRBS, algorithm is used for scheduling the real-time service users.

**7.** The packet-level scheduling method of claim 1, wherein scheduling of the non real-time service users is stopped when there are no remaining resources for the non real-time service user after scheduling of the real-time service traffic is finished.

**8.** The packet-level scheduling method of one of claim 1 or claim 7, wherein when scheduling the non real-time service users, the users are prioritized on the basis of the minimum reserved bit rate.

**9.** The packet-level scheduling method of claim 8, wherein a minimum bit rate-based scheduling, MBRBS, algorithm is used for scheduling the non real-time service traffic.

**10.** The packet-level scheduling method of claim 1, wherein a scheduling process for the real-time service traffic and a scheduling process for the non real-time service traffic are repeated during a packet call.

**11.** A packet-level scheduling apparatus for providing individual quality of service for each data packet traffic of a plurality of data packets transmitted from a plurality of users in a cellular system, the packet-level scheduling apparatus comprising:

a real-time data buffer (410) for storing data packets transmitted from real-time traffic users among the plurality of users;
a non real-time data buffer (420) for storing data packets transmitted from non real-time traffic users among the plurality of users;
a quality of service QoS-based priority queuing, QBPQ, scheduler (430) for determining whether to serve a service for the data packet transmitted from the real-time traffic user stored in the real-time data buffer by using a predetermined threshold value for delay time and traffic of the packets; and
a minimum-bit rate based scheduler, MBRBS, (442) for scheduling data packets stored in the non real-time data buffer (420) when there are remaining channels after packet loss rate based scheduling, PLRBS, of data packets transmitted from real-time traffic user is finished;
**characterized in that** the QBPQ scheduler (430) is adapted to set the predetermined threshold value for the delay time of the real-time packets such as to maximize capacity for real-time traffic service users and non real-time traffic service users.

**12.** The packet-level scheduling apparatus of claim 11, wherein the threshold value corresponds to a minimum allowable delay for a head-of-line. HOL. packet delay.

**13.** The packet-level scheduling apparatus of claim 12, wherein the QBPQ scheduler (430) excludes a user from a scheduling process when HOL packet delay of a data packet transmitted from the user is greater than the minimum allowable delay or delay of the packet is less than a parameter obtained by multiplying the minimum allowable delay and a predetermined weight.

**14.** The packet-level scheduling apparatus of one of claims 11 - 13, wherein the capacity maximization for real-time traffic users and for non real-time traffic users is performed assigning the real-time traffic users a first weighting coefficient and assigning the non real-time traffic users a second weighting coefficient.

**Patentansprüche**

**1.** Verfahren zur Zeitplanung auf Paketebene zum Bereitstellen individueller Dienstqualität für jeden Datenpaketverkehr einer Vielzahl von von einer Vielzahl von Anwendern in einem zellularen System gesendeten Datenpaketen, wobei das Zeitplanungsverfahren auf Paketebene folgendes aufweist:

> Derartiges Bestimmen der Vielzahl von Datenpaketen, dass sie Echtzeitdienstverkehr und Nicht-Echtzeitdienstverkehr sind,
> Zeitplanung (S310) gemäß einer QoS-basierenden Prioritäts-Schlangenbildung, QBPQ, für eine Vielzahl von Anwendern, die Datenpakete gesendet haben, für die bestimmt ist, dass sie Echtzeitdienstverkehr sind, auf der Basis eines vorbestimmten Schwellenwerts für eine Verzögerungszeit und eines Verkehrs der Pakete; und eine auf minimaler Bitrate basierende, MBRBS, Zeitplanung (S330) für eine Vielzahl von Anwendern, die Datenpakete gesendet haben, für die bestimmt ist, dass sie Nicht-Echtzeitdienstverkehr sind, wenn es übrige Kanäle gibt, nachdem eine auf einer Paketverlustrate basierende, PLRBS, Zeitplanung der Echtzeitdienstanwender beendet ist,
> **gekennzeichnet durch** derartiges Einstellen des vorbestimmten Schwellenwerts für die Verzögerungszeit der Echtzeitpakete, dass eine Kapazität für Echtzeitverkehrsdienstanwender und Nicht-Echtzeitverkehrsdienstanwender maximiert wird.

2. Verfahren zur Zeitplanung auf Paketebene nach Anspruch 1, wobei die Kapazitätsmaximierung für Echtzeitverkehrsanwender und für Nicht-Echtzeitverkehrsanwender unter Zuordnung eines ersten Gewichtungskoeffizienten zu den Echtzeitverkehrsanwendern und unter Zuordnung eines zweiten Gewichtungskoeffizienten zu den Nicht-Echtzeitverkehrsanwendern durchgeführt wird.

3. Verfahren zur Zeitplanung auf Paketebene nach Anspruch 1 oder 2, wobei der Schwellenwert durch einen auf Dienstqualität, QoS, basierendem Prioritäts-Schlangenbildungsalgorithmus gebildet wird.

4. Verfahren zur Zeitplanung auf Paketebene nach Anspruch 2, wobei der Schwellenwert derart gebildet wird, dass er eine minimale zulässige Verzögerung für eine Schlangenanfangs-, HOL-, Paketverzögerung ist, und dann, wenn eine Verzögerung des Pakets einen Schwellenwert übersteigt, das entsprechende Paket weggeworfen wird und ein Anwender, der das Paket gesendet hat, von einer Zeitplanung ausgeschlossen wird.

5. Verfahren zur Zeitplanung auf Paketebene nach Anspruch 2 oder Anspruch 4, wobei dann, wenn die Verzögerung des Pakets geringer als ein durch Multiplizieren des Schwellenwerts und einer vorbestimmten Gewichtung für den Echtzeitdienstverkehr erhaltener Parameter ist, ein Anwender, der das Paket gesendet hat, von einer Zeitplanung ausgeschlossen wird.

6. Verfahren zur Zeitplanung auf Paketebene nach Anspruch 5, wobei ein Algorithmus für eine auf einer Paketverlustrate basierende Zeitplanung, PLRBS, zur Zeitplanung der Echtzeitdienstanwender verwendet wird.

7. Verfahren zur Zeitplanung auf Paketebene nach Anspruch 1, wobei eine Zeitplanung der Nicht-Echtzeitdienstanwender gestoppt wird, wenn es keine übrigen Ressourcen für die Nicht-Echtzeitdienstanwender gibt, nachdem eine Zeitplanung des Echtzeitdienstverkehrs beendet ist.

8. Verfahren zur Zeitplanung auf Paketebene nach Anspruch 1 oder Anspruch 7, wobei dann, wenn eine Zeitplanung der Nicht-Echtzeitdienstanwender erfolgt, die Anwender auf der Basis der minimalen reservierten Bitrate priorisiert werden.

9. Verfahren zur Zeitplanung auf Paketebene nach Anspruch 8, wobei ein Algorithmus für eine auf einer minimalen Bitrate basierende Zeitplanung, MBRBS, zur Zeitplanung des Nicht-Echtzeitdienstverkehrs verwendet wird.

10. Verfahren zur Zeitplanung auf Paketebene nach Anspruch 1, wobei ein Zeitplanungsprozess für den Echtzeitdienstverkehr und ein Zeitplanungsprozess für den Nicht-Echtzeitdienstverkehr während eines Paketaufrufs wiederholt werden.

11. Vorrichtung zur Zeitplanung auf Paketebene zum Bereitstellen individueller Dienstqualität für jeden Datenpaketverkehr einer Vielzahl von von einer Vielzahl von Anwendern in einem zellularen System gesendeten Paketdaten, wobei die Vorrichtung für eine Zeitplanung auf Paketebene folgendes aufweist:

> einen Echtzeit-Datenpuffer (410) zum Speichern von von Echtzeitverkehrsanwendern unter der Vielzahl von Anwendern gesendeten Datenpaketen,

einen Nicht-Echtzeit-Datenpuffer (420) zum Speichern von von Nicht-Echtzeitverkehrsanwendern unter der Vielzahl von Anwendern gesendeten Datenpaketen,

einen Zeitplaner (430) für eine auf Dienstqualität, QoS, basierende Prioritäts-Schlangenbildung, QBPQ, zum Bestimmen, ob ein Dienst für das von dem im Echtzeit-Datenpuffer gespeicherten Echtzeitverkehrsanwender gesendete Datenpaket zu bedienen ist, indem ein vorbestimmter Schwellenwert für eine Verzögerungszeit und ein Verkehr der Pakete verwendet wird; und

einen auf einer minimalen Bitrate basierenden Zeitplaner MBRBS (422) zur Zeitplanung von im Nicht-Echtzeit-Datenpuffer (420) gespeicherten Datenpaketen, wenn es übrige Kanäle gibt, nachdem eine auf einer Paketverlustrate basierende Zeitplanung, PLRBS, von von einem Echtzeitverkehrsanwender gesendeten Datenpaketen beendet ist;

**dadurch gekennzeichnet, dass** der QBPQ-Zeitplaner (430) dazu geeignet ist, den vorbestimmten Schwellenwert für die Verzögerungszeit der Echtzeitpakete derart einzustellen, dass eine Kapazität für Echtzeitverkehrsdienstanwender und Nicht-Echtzeitverkehrsdienstanwender maximiert wird.

12. Vorrichtung zur Zeitplanung auf Paketebene nach Anspruch 11, wobei der Schwellenwert einer minimalen zulässigen Verzögerung für eine Schlangenanfangs-, HOL-, Paketverzögerung entspricht.

13. Vorrichtung zur Zeitplanung auf Paketebene nach Anspruch 12, wobei der QBPQ-Zeitplaner (430) einen Anwender von einem Zeitplanungsprozess ausschließt, wenn eine HOL-Paketverzögerung eines vom Anwender gesendeten Datenpakets größer als die minimale zulässige Verzögerung ist oder eine Verzögerung des Pakets geringer als ein durch Multiplizieren der minimalen zulässigen Verzögerung und einer vorbestimmten Gewichtung erhaltener Parameter ist.

14. Vorrichtung zur Zeitplanung auf Paketebene nach einem der Ansprüche 11-13, wobei die Kapazitätsmaximierung für Echtzeitverkehrsanwender und für Nicht-Echtzeitverkehrsanwender unter Zuordnung eines ersten Gewichtungskoeffizienten zu den Echtzeitverkehrsanwendern und unter Zuordnung eines zweiten Gewichtungskoeffizienten zu den Nicht-Echtzeitverkehrsanwendern durchgeführt wird.

**Revendications**

1. Procédé d'ordonnancement de niveau de paquet pour fournir une qualité de service individuelle pour chaque trafic de paquet de données d'une pluralité de paquets de données transmis depuis une pluralité d'utilisateurs dans un système cellulaire, le procédé d'ordonnancement de niveau de paquet comprenant :

déterminer la pluralité de paquets de données comme étant un trafic de service en temps réel et un trafic de service non en temps réel ;

ordonnancer la mise en file d'attente de priorité basée sur la QoS, QBPQ, (S310) d'une pluralité d'utilisateurs qui ont transmis des paquets de données déterminés comme étant un trafic de service en temps réel sur la base d'une valeur de seuil prédéterminée pour un temps de retard et un trafic des paquets ; et

ordonner sur la base du débit binaire minimum, MBRBS, (S330) une pluralité d'utilisateurs qui ont transmis des paquets de données déterminés comme étant un trafic de service en temps non réel lorsqu'il y a des canaux restants après que l'ordonnancement basé sur le taux de perte de paquets, PLRBS, des utilisateurs de service en temps réel est fini,

**caractérisé par** l'établissement de la valeur de seuil prédéterminée pour le temps de retard des paquets en temps réel de manière à maximiser la capacité pour les utilisateurs de service de trafic en temps réel et les utilisateurs de service de trafic en temps non réel.

2. Procédé d'ordonnancement de niveau de paquet selon la revendication 1, dans lequel la maximisation de capacité pour les utilisateurs de trafic en temps réel et pour les utilisateurs de trafic en temps non réel est effectué en assignant aux utilisateurs de trafic en temps réel un premier coefficient de pondération et en assignant aux utilisateurs de trafic en temps non réel un second coefficient de pondération.

3. Procédé d'ordonnancement de niveau de paquet selon la revendication 1 ou 2, dans lequel la valeur de seuil est établie par un algorithme de mise en file d'attente de priorité basée sur la qualité de service, QoS.

4. Procédé d'ordonnancement de niveau de paquet selon la revendication 2, dans lequel la valeur de seuil est établie pour être un retard admissible minimum pour un retard de paquet de tête de ligne, HOL, et lorsque le retard du paquet dépasse une valeur de seuil, le paquet correspondant est rejeté et un utilisateur qui a transmis le paquet est exclu de l'ordonnancement.

5. Procédé d'ordonnancement de niveau de paquet selon la revendication 2 ou la revendication 4, dans lequel, lorsque le retard du paquet est inférieur à un paramètre obtenu en multipliant la valeur de seuil et un poids prédéterminé pour le trafic de service en temps réel, un utilisateur qui a transmis le paquet est exclu de l'ordonnancement.

6. Procédé d'ordonnancement de niveau de paquet selon la revendication 5, dans lequel un algorithme d'ordonnancement basé sur le taux de perte de paquets, PLRBS, est utilisé pour ordonnancer les utilisateurs de service en temps réel.

7. Procédé d'ordonnancement de niveau de paquet selon la revendication 1, dans lequel l'ordonnancement des utilisateurs de service en temps non réel est arrêté lorsqu'il n'y a pas de ressources restantes pour l'utilisateur de service en temps non réel après que l'ordonnancement du trafic de service en temps réel est fini.

8. Procédé d'ordonnancement de niveau de paquet selon la revendication 1 ou la revendication 7, dans lequel lors de l'ordonnancement des utilisateurs de service en temps non réel, les utilisateurs sont priorisés sur la base du débit binaire réservé minimum.

9. Procédé d'ordonnancement de niveau de paquet selon la revendication 8, dans lequel un algorithme d'ordonnancement basé sur le débit binaire minimum, MBRBS, est utilisé pour ordonnancer le trafic de service en temps non réel.

10. Procédé d'ordonnancement de niveau de paquet selon la revendication 1, dans lequel un processus d'ordonnancement pour le trafic de service en temps réel et un processus d'ordonnancement pour le trafic de service en temps non réel sont répétés pendant un appel de paquet.

11. Appareil d'ordonnancement de niveau de paquet pour fournir une qualité de service individuelle pour chaque trafic de paquet de données d'une pluralité de paquets de données transmis depuis une pluralité d'utilisateurs dans un système cellulaire, l'appareil de d'ordonnancement de niveau de paquet comprenant :

   un tampon de données en temps réel (410) pour stocker des paquets de données transmis depuis des utilisateurs de trafic en temps réel parmi la pluralité d'utilisateurs ;
   un tampon de données en temps non réel (420) pour stocker des paquets de données transmis depuis des utilisateurs de trafic en temps non réel parmi la pluralité d'utilisateurs ;
   un ordonnanceur de mise en file d'attente de priorité basée sur la qualité de service, QoS, QBPQ, (430) pour déterminer si prendre en charge un service pour le paquet de données transmis depuis l'utilisateur de trafic en temps réel stocké dans le tampon de données en temps réel en utilisant une valeur de seuil prédéterminée pour un temps de retard et un trafic des paquets ; et
   un ordonnanceur basé sur le débit binaire minimum, MBRBS, (442) pour ordonnancer des paquets de données stockés dans le tampon de données en temps non réel (420) lorsqu'il y a des canaux restants après que l'ordonnancement basé sur le taux de perte de paquets, PLRBS, de paquets de données transmis depuis un utilisateur de trafic en temps réel est fini,
   **caractérisé en ce que** l'ordonnanceur QBPQ (430) est adapté pour établir la valeur de seuil prédéterminée pour le temps de retard des paquets en temps réel de manière à maximiser la capacité pour les utilisateurs de service de trafic en temps réel et les utilisateurs de service de trafic en temps non réel.

12. Appareil d'ordonnancement de niveau de paquet selon la revendication 11, dans lequel la valeur de seuil correspond à un retard admissible minimum pour un retard de paquet de tête de ligne HOL.

13. Appareil d'ordonnancement de niveau de paquet selon la revendication 12, dans lequel l'ordonnanceur QBPQ (430) exclut un utilisateur d'un processus d'ordonnancement lorsque le retard de paquet HOL d'un paquet de données transmis depuis l'utilisateur est supérieur au retard admissible minimum ou le retard du paquet est inférieur à un paramètre obtenu en multipliant le retard admissible minimum et un poids prédéterminé.

14. Appareil d'ordonnancement de niveau de paquet selon l'une des revendications 11 à 13, dans lequel la maximisation de capacité pour les utilisateurs de trafic en temps réel et pour les utilisateurs de trafic en temps non réel est effectué en assignant aux utilisateurs de trafic en temps réel un premier coefficient de pondération et en assignant aux utilisateurs de trafic en temps non réel un second coefficient de pondération.

**FIG. 1**

$(= W_{\max}^{i})$

120

130 $(= W_i(t))$

Delay
QoS
requirement

110 $(= k \times W_{\max}^{i})$

Time

FIG. 2

Sum of normalization factors for RT and NRT users

k=0 $\qquad N_P(0)/N_P(0) \qquad$

210 220

$N_P(k)/N_P(0)$ $N_Q(k)/N_Q(1)$

0<k<1

$N_Q(1)/N_Q(1)$

k=1

$\longleftrightarrow$ Normalization factor for NR users

$\longleftarrow\!\cdots\!\cdots\!\longrightarrow$ Normalization factor for NRT users

# FIG. 3

Start

**QBPQ** S310

Scheduling i RT users — S311

S312 If HOL packet delay? $k \times W^i_{max}$

No → Excluding z who does not exceed $k \times W^i_{max}$ from scheduling targets — S313

Yes

**PLRBS** S320

Schedule (i-z) RT users using PLRBS scheme

**MBRBS** S330

S331 If the number of remaining channels < maximum number of subchannels?

Yes → Schedule j NRT users with low priority using MBRBS scheme — S332

No

End

RT service with high priority

NRT service with low priority

FIG. 4

FIG. 5

FIG. 6

FIG. 7

**FIG. 8**

FIG. 9

FIG. 10

**FIG. 11**

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200110615
- KR 200083690
- EP 1432183 A
- US 6693892 B1